(19) Europäisches Patentamt
European Patent Office
Office européen des brevets

(11) **EP 1 117 989 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(21) Anmeldenummer: **99950567.0**

(22) Anmeldetag: **29.09.1999**

(51) Int Cl.:
***G01N 21/86*** (2006.01)

(86) Internationale Anmeldenummer:
**PCT/EP1999/007222**

(87) Internationale Veröffentlichungsnummer:
**WO 2000/019185 (06.04.2000 Gazette 2000/14)**

(54) **VERFAHREN ZUR PHOTOMETRISCHEN AUSWERTUNG VON TESTELEMENTEN**

METHOD FOR THE PHOTOMETRIC ANALYSIS OF TEST ELEMENTS

PROCEDE D'EVALUATION PHOTOMETRIQUE D'ELEMENTS DE TEST

(84) Benannte Vertragsstaaten:
**AT BE CH CY DE DK ES FI FR GB GR IE IT LI LU MC NL PT SE**

(30) Priorität: **29.09.1998 DE 19844500**

(43) Veröffentlichungstag der Anmeldung:
**25.07.2001 Patentblatt 2001/30**

(60) Teilanmeldung:
**09000913.5**

(73) Patentinhaber: **Roche Diagnostics GmbH**
**68305 Mannheim (DE)**

(72) Erfinder:
• **MILTNER, Karl**
**D-67227 Frankenthal (DE)**
• **RUPPENDER, Uwe**
**D-68161 Mannheim (DE)**
• **WERSIG, Christian**
**D-67134 Kirkenheide (DE)**
• **ZIMMER, Volker**
**D-69221 Dossenheim (DE)**

(56) Entgegenhaltungen:
EP-A- 0 165 535    DE-A- 19 630 160
US-A- 5 114 350    US-A- 5 397 538

**Beschreibung**

Die vorliegende Erfindung betrifft ein Verfahren zur photometrischen Auswertung von Testelementen mit Nachweiszonen, das stabil gegen Positionierungstoleranzen der Nachweiszone ist.

Die photometrische Auswertung von Testelementen stellt eines der gebräuchlichsten Verfahren zur schnellen Bestimmung der Konzentration von Analyten in Proben dar. Photometrische Auswertungen werden allgemein im Bereich der Analytik, der Umweltanalytik und vorallem im Bereich der medizinischen Diagnostik eingesetzt. Insbesondere im Bereich der Blutglukosediagnostik aus Kapillarblut besitzen Testelemente, die photometrisch ausgewertet werden, einen großen Stellenwert.

Ein allgemeiner Trend bei der Durchführung analytischer Tests ist es, die Probenmengen zu reduzieren. Dies liegt häufig darin begründet, daß nur geringe Probenmengen vorhanden sind. Beispielsweise im Bereich der Blutzuckerbestimmung entnimmt sich der Diabetiker selbst einen Blutstropfen aus der Fingerbeere und eine Verringerung der für den Test notwendigen Blutmenge bringt einen deutlichen Gewinn an Convenience. Dies liegt vor allem daran, daß der Stich zur Blutgewinnung weniger tief gewählt werden kann. Verbunden mit einer Reduktion der Probenmengen ist eine Verkleinerung der Testelemente und insbesondere der Nachweiszonen, in denen die eigentliche Reaktion der Probe mit den Analyten abläuft. Um eine exakte photometrische Auswertung durchführen zu können, ist daher eine präzise Positionierung der Nachweiszone notwendig. Im Stand der Technik sind eine Vielzahl von Testelementhalterungen bekannt, mit denen eine recht genaue Relativpositionierung von Nachweiszone und Meßoptik erfolgt. Beispielhaft sei an dieser Stelle das europäische Patent EP-B-0 618 443 (entsprechend: US-5,424,035) genannt, bei dem eine Positionierung der Nachweiszonen des Testelementes sowohl lateral als auch vertikal zur Meßoptik erfolgt. Stellvertretend für eine Vielzahl weiterer Analysesysteme, die eine Positionierung von Teststreifen durchführen, sei noch das Dokument EP-A-0 319 922 genannt. Die im Stand der Technik bekannten Systeme arbeiten jedoch mit Nachweiszonen, die 5 mm x 5 mm überschreiten. Dementsprechend ist eine Positionierung in der im Stand der Technik bekannten Art und Weise relativ unproblematisch. Wird die Nachweiszone in ihrer lateralen Ausdehnung hingegen verkleinert, so müssen sowohl bei der Produktion der Testelemente als auch bei der Positionierung innerhalb eines Auswertesystems große Anstrengungen unternommen werden, um zu verläßlichen Analyseergebnissen zu gelangen. Die Aufgabe der vorliegenden Erfindung bestand darin, ein Verfahren und eine Vorrichtung zur photometrischen Auswertung von Testelementen vorzuschlagen, mit dem auch Testelemente mit kleinen Nachweiszonen verläßlich ausgewertet werden können.

Die vorstehende Aufgabe wird durch ein Verfahren zur photometrischen Auswertung von Testelementen gelöst, bei dem das Testelement in eine Halterung eingebracht wird, in der seine Nachweiszone so positioniert ist, daß sie gegenüber einer Beleuchtungseinheit mit mindestens zwei Lichtquellen angeordnet ist. Nach einem Inkontaktbringen der Nachweiszone mit der zu analysierenden Probe wird eine erste Lichtquelle aktiviert, um die Nachweiszone zu bestrahlen. Von der Nachweiszone reflektiertes oder durch die Nachweiszone transmittiertes Licht wird als erstes Detektionssignal detektiert. Nachfolgend wird eine zweite Lichtquelle aktiviert, mit der ein zweiter Bereich der Nachweiszone bestrahlt wird, der gegenüber dem ersten Bereich in Richtung der erwarteten Positionierungstoleranz versetzt ist. Das von diesem Bereich reflektierte oder durch diesen Bereich transmittierte Licht wird als zweites Detektionssignal detektiert. Die von den beiden Bereichen erhaltenen Detektionssignale werden verglichen und geprüft, welches der Signale durch Beleuchtung eines vollständig auf der Nachweiszone liegenden Bereiches gewonnen wurde. Ein entsprechendes Detektionssignal wird ausgewählt und in prinzipiell bekannter Weise zur Ermittlung der Analytkonzentration ausgewertet.

Im Folgenden wird das erfindungsgemäße Verfahren zur Kompensation von Positionierungstoleranzen beschrieben.

Eine Vorrichtung, mit der die erfindungsgemäßen Verfahren durchgeführt werden können, besitzt eine Halterung, in der ein Testelement gegenüber einer ebenfalls zu der Vorrichtung gehörenden Beleuchtungseinheit positioniert wird. Als Halterung können im Rahmen der folgenden Erfindung aus dem Stand der Technik bekannte Halterungen, insbesondere die in EP-B-0 618 443 beschriebene Halterung, eingesetzt werden. Trotz der erfindungsgemäßen Vorgehensweise, die zur Stabilisierung der Auswertung gegenüber Positionstoleranzen dient, ist es wünschenswert, mittels der Halterung bereits eine möglichst genaue Positionierung der Nachweiszone zu erzielen. Die Positionstoleranzen lassen sich jedoch nicht unter eine bestimmte Schwelle senken, was deutlicher wird, wenn die in die Positionstoleranzen hereinspielenden Einzelgrößen betrachtet werden. Auf seiten des Auswertesystems gibt es bereits eine Reihe von Toleranzen für eine relative Positionierung von Halterung und Beleuchtungseinheit. Weitere Toleranzen werden durch die Positionierung des Testelementes innerhalb der Halterung hervorgerufen, zumal ein gewisses Spiel zwischen Testelement und Halterung notwendig ist, um dem Benutzer ein Einfahren des Testelementes in den Halter zu ermöglichen. Außerdem unterliegt das Testelement selbst gewissen Herstellungstoleranzen, die insbesondere die Breite des Testelementes betreffen. Schließlich treten noch Toleranzen bei der relativen Lage der Nachweiszone zu dem Testelement bzw. dem Trägermaterial des Testelementes auf. Insbesondere bei Kapillarspalttestelementen kann die Verschiebung der Nachweiszone in Richtung der Breite des Testelementes erheblich sein, worauf weiter unten detaillierter eingegangen wird.

Die erfindungsgemäße Vorrichtung zur photometrischen Auswertung beinhaltet weiterhin eine Beleuchtungseinheit mit mindestens einer ersten und einer zweiten Lichtquelle. Mit diesen Lichtquellen werden nebeneinander liegende Bereiche der Nachweiszone beleuchtet. Die Lichtquellen sind so angeordnet, daß die Zentren der beleuchteten Bereiche auf der Nachweiszone in Richtung einer zu erwartenden Positionierungstoleranz gegeneinander verschoben sind. Dies kann beispielsweise erreicht werden, indem die Lichtquellen selbst gegeneinander versetzt sind und im wesentlichen senkrecht auf die Nachweiszone strahlen. Die Lichtquellen können jedoch auch so angeordnet sein, daß sie schräg auf die Nachweiszone strahlen und der Abstand der bestrahlten Bereiche im wesentlichen durch die Verkippung der Lichtquellen gegenüber der Senkrechten relativ zur Nachweiszone erzielt wird. Als Lichtquellen sind prinzipiell die im Stand der Technik für diagnostische Nachweissysteme bekannten Lichtquellen geeignet. Bevorzugt sind Leuchtdioden, da diese einen verhältnismäßig geringen Energieverbrauch aufweisen und ein relativ schmalbandiges Spektrum liefern. Besonders bevorzugt sind miniaturisierte Leuchtdioden, die direkt auf einer Halbleiterplatine aufgebracht werden können. Solche Leuchtdioden sind in Abmessungen erhältlich, die auch ohne zwischengeschaltete Optik zu geeignet großen Leuchtflecken auf der Nachweiszone führen. Vorteilhaft wird im Rahmen der vorliegenden Erfindung jedoch zusätzlich zu den Lichtquellen eine Optik aus Linsen und gegebenenfalls auch Blenden eingesetzt. Es ist von Vorteil, die Form der bestrahlten Bereiche der Form der Nachweiszone und den zu erwartenden Toleranzen anzupassen. Bei einer rechteckigen Nachweiszone ist es beispielsweise vorteilhaft, ovale Bereiche oder sogar rechteckige Bereiche zu beleuchten. Dies kann beispielsweise durch geeignete Linsen oder Blenden erreicht werden.

Im Rahmen der vorliegenden Erfindung ist es auch vorgesehen, mehr als 2 Lichtquellen einzusetzen. Ist in einer Richtung der Nachweiszone eine besonders große Positionierungstoleranz zu erwarten, können beispielsweise 3 Lichtquellen eingesetzt werden, die in Richtung der zu erwartenden Positionierungstoleranz versetzte Bereiche auf der Nachweiszone beleuchten. Die vorliegende Erfindung ist auch geeignet, Positionierungstoleranzen in mehr als einer Richtung aufzufangen. Beispielsweise können 4 Lichtquellen verwendet werden, die vier in Form eines Quadrates oder Rechtecks angeordnete Bereiche beleuchten. Mit einer derartigen Anordnung kann eine Fehlmessung durch Positionierungsungenauigkeit sowohl in Richtung der einen Seite des Quadrates als auch in der dazu senkrecht angeordneten Richtung vermieden werden.

Bei einem photometrischen Auswerteverfahren von Testelementen wird eine Probe mit der Nachweiszone des Testelementes in Kontakt gebracht. Das Inkontaktbringen ist so zu verstehen, daß die Proben entweder direkt auf die Nachweiszone aufgegeben werden, oder daß Probe in die Nachweiszone hineintransportiert wird. Letzteres ist insbesondere bei Kapillarspalttestelementen der Fall, bei denen die Probe (in der Regel Kapillarblut aus der Fingerbeere) an den Kapillarspalt herangeführt wird und durch diesen der Nachweiszone zugeführt wird. Es sind auch Ausführungsformen denkbar, bei denen eine feste Probe, beispielsweise durch Reiben eines Vlieses an einem Gegenstand, auf das Vlies aufgebracht wird, und die Probe darauffolgend mittels eines Hilfsfluids aus dem Vlies zur Nachweiszone transportiert wird, wie dies beispielsweise bei einigen Drogenschnelltesten der Fall ist. Weiterhin gibt es Chromatographieteststreifen, bei denen die Probe über saugfähige Materialien in die Nachweiszone hineingebracht wird. Aus dem vorstehend genannten ergibt sich, daß Proben im Sinne der Erfindung in erster Linie Probeflüssigkeiten, wie beispielsweise Blut sind, daß jedoch auch feste Probenmaterialien in Betracht kommen.

Die mit der Nachweiszone in Kontakt gebrachte Probe führt bei Testelementen zu einer detektierbaren Veränderung der Nachweiszone. Die Erzeugung von detektierbaren Veränderungen in Folge der Reaktion eines in der Probe enthaltenen Analyten mit einem Reagenzsystem ist im Stand der Technik hinlänglich bekannt, so daß an dieser Stelle nicht näher darauf eingegangen wird. Für die vorliegende Erfindung ist es jedoch relevant, daß die detektierbare Veränderung mit den verwendeten Lichtquellen und dem verwendeten Detektor ausreichend detektiert werden kann. Dies ist dann der Fall, wenn in der Nachweiszone eine Verfärbung gebildet wird, die von den Lichtquellen emittierte Strahlung absorbiert und somit das transmittierte oder reflektierte Licht schwächt. Es ist jedoch auch der umgekehrte Fall möglich, bei dem ein Farbstoff, dessen Anwesenheit photometrisch detektiert wird, durch die Reaktion des Reagenzsystemes mit einem Analyten zerstört wird und das eigentliche Meßsignal in einer Abnahme der Schwächung des transmittierten oder reflektierten Lichtes liegt. Die Bezeichnung Licht oder Lichtquelle soll im Rahmen der Erfindung dahingehend verstanden werden, daß Wellenlängenbereiche umfaßt sind, die mit optischen Anordnungen anwendbar sind, d. h. neben dem visuellen Bereich auch UV und IR.

Im Rahmen der vorliegenden Erfindung können im Stand der Technik hinlänglich bekannte Detektoren, insbesondere Halbleiterdetektoren, eingesetzt werden. Wichtig ist es, den bzw. die Detektoren so auszuwählen, daß von der Nachweiszone reflektierte bzw. durch die Nachweiszone transmittierte Strahlung zu einem Signal führt, wenn der Detektor mit ihr beleuchtet wird. Vorteilhaft können Detektoren eingesetzt werden, die ihr Empfindlichkeitsmaximum im Bereich der reflektierten oder transmittierten Strahlung haben. Gegebenenfalls können auch Filter eingesetzt werden, die selektiv die Meßstrahlung hindurchlassen, um die Detektion gegen Störlichteinflüsse stabiler zu machen.

Zur Durchführung des erfindungsgemäßen Verfahrens wird zunächst eine erste Lichtquelle der Beleuchtungseinheit zur Bestrahlung eines ersten Bereiches der Nachweiszone aktiviert und das während der Aktivierung am Detektor anliegende Signal als erstes Detektionssignal aufgenommen. Daraufhin wird die erste Lichtquelle deaktiviert und die zweite Lichtquelle zur Bestrahlung eines zweiten Bereiches aktiviert, wobei das am Detektor anliegende Signal als zweites Detektionssignal aufgezeichnet wird. Elektrische Schaltungen und Verfahren zur Aktivierung von Lichtquellen, insbesondere Leuchtdioden, sind im Stand der Technik hinlänglich bekannt. Exemplarisch sei auf das Dokument US-5,463,467 hingewiesen, in dem eine Aktivierung von Leuchtdioden zur Durchführung von photometrischen Analysen beschrieben ist. Im Rahmen der vorliegenden Erfindung ist es auch vorgesehen, die Lichtquellen mittels Signalen zu aktivieren, die es ermöglichen, Fremdlichteinflüsse aus dem detektierten Signal zu eleminieren, wie dies beispielsweise in der genannten US-5,463,467 beschrieben ist.

Ein wesentlicher Schritt des erfindungsgemäßen Verfahrens besteht darin, die detektierten Signale zu vergleichen und zu ermitteln, welches der Signale bzw. ob beide Signale durch Beleuchtung eines vollständig auf der Nachweiszone liegenden Bereiches gewonnen wurden. Diese Ermittlung kann auf verschiedenen Wegen erfolgen. Findet in der Nachweiszone durch den Analyten eine farbbildende Reaktion statt, so können erstes und zweites Detektionssignal verglichen werden und das stärker abgeschwächte Lichtsignal wird als vollständig auf der Nachweiszone liegend ausgewählt. Wird hingegen eine Reaktion durchgeführt, bei der durch den Analyten Farbe abgebaut wird, so wird als vollständig auf der Nachweiszone lokalisiertes Signal dasjenige ausgewählt, das die geringste Abschwächung erfahren hat. Die beiden genannten Wege können durchgeführt werden, ohne daß an der Nachweiszone vor Reaktion mit dem Analyten eine Messung durchgeführt wurde, um einen Leerwert zu ermitteln. Bevorzugt ist es jedoch im Rahmen der Erfindung, wenn zunächst mit der ersten und zweiten Lichtquelle Messungen an der Nachweiszone vor Reaktion mit der Probe durchgeführt werden. Die so ermittelten Detektionssignale können als Basis sowohl für die Ermittlung, welches Signal auf eine vollständige Lage des bestrahlten Bereiches auf der Nachweiszone zurückgeht, als auch als Basiswert (sogenannter Leerwert) für die Bestimmung der Analytkonzentration verwendet werden. Sind Messungen mit den Lichtquellen an einem noch nicht reagierten Testelement durchgeführt worden, so kann der erfindungsgemäße Ermittlungsschritt vorteilhaft durchgeführt werden, indem für jede Lichtquelle der Signalhub vor und nach Reaktion der Nachweiszone mit der Probe ermittelt und diejenige Lichtquelle zur Ermittlung der Analytkonzentration ausgewählt wird, für die der höhere Signalhub erhalten wurde.

Die Auswahl einer der mindestens zwei Lichtquellen als für die Ermittlung der Analytkonzentration geeignet kann auch erfolgen, ohne daß hierfür ein Inkontaktbringen der Nachweiszone mit der Probe notwendig ist. Dies kann beispielsweise erreicht werden, indem die Nachweiszone aus einem hellen Material besteht und das Testelement im an die Nachweiszone angrenzenden Bereich dunkel ausgestaltet ist. Werden an einem derartigen Testelement Messungen mit erster und zweiter Lichtquelle durchgeführt und verglichen, so kann die Lichtquelle, mit der das höhere Remissionssignal erhalten wird, als geeignet für die Ermittlung der Analytkonzentration ausgewählt werden. Weiterhin ist es möglich, die Nachweiszone zumindest teilweise transparent zu gestalten, während der an die Nachweiszone angrenzende Bereich des Testelementes im wesentlichen lichtundurchlässig ist. Wird nunmehr eine Transmissionsmessung durchgeführt, so kann die Lichtquelle ausgewählt werden, mit der eine höhere Transmission ermittelt wurde. Wurde im Vorangehenden auf ein höheres oder niedrigeres Signal Bezug genommen, so kann damit ein "Rohsignal" gemeint sein, wie es am Detektor bei Aktivierung der Lichtquellen anliegt. Vorteilhaft werden die Rohsignale vor ihrem Vergleich noch korrigiert, d. h. es wird die Beleuchtungsgeometrie sowie die von Lichtquelle zu Lichtquelle schwankende Intensität berücksichtigt. Dies kann beispielsweise durch Normierung der Signale auf die Leerwerte (Quotientenbildung von aktuellem Signal und Signal bei unreagiertem Testelement oder Standard) erfolgen.

Im Folgenden wird die vorliegende Erfindung anhand einiger Figuren näher erläutert:

　　　Figur 1: Perspektivische und Querschnittsdarstellung eines Kapillarspalttestelementes

　　　Figur 2: Querschnitt durch eine Vorrichtung längs eines eingeschobenen Testelementes

　　　Figur 3: Querschnitt durch eine Vorrichtung quer zum Testelement

　　　Figur 4: Blockdarstellung einer Auswertevorrichtung

　　　Figur 5: Lage bestrahlter Bereiche auf der Nachweiszone

　　　Figur 6: Bestrahlte Bereiche auf der Nachweiszone

　　　Figur 7: Signalverlauf gemessen im Kontrollbereich

　　　Figur 8: Signalverlauf bei Verschiebung des Testelements

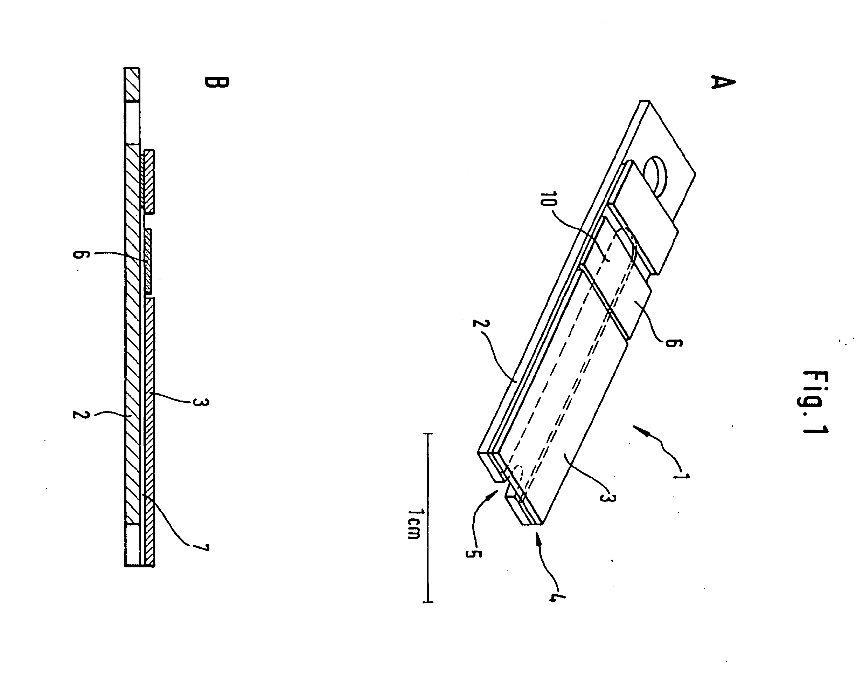

Figur 1A zeigt ein Kapillarspalttestelement in perspektivischer Ansicht. Das Testelement besitzt eine Trägerfolie (2) und eine Deckelfolie (3). Zwischen diesen Folien befindet sich ein Abstandshalter (4), der eine Ausnehmung aufweist, so daß zwischen Trägerfolie und Deckelfolie ein Kapillarspalt gebildet wird. Zur Durchführung eines diagnostischen Testes wird Probeflüsigkeit, in der Regel Kapillarblut, an die Öffnung (5) des Kapillarspaltes herangeführt. Die Probeflüssigkeit wird aufgrund der Kappilarkräfte durch den Kanal hindurchbewegt und erreicht das Reagenzpapier (6). Das Reagenzpapier (6) ist seinerseits ebenfalls auf dem Abstandshalter (4) aufgebracht, so daß bei Anwesenheit von Probeflüssigkeit in dem Kapillarspalt (7) lediglich der mittlere Teil des Reagenzpapieres mit Probe befeuchtet wird und einer Farbbildung bzw. Signalbildung unterliegt. Dieser mittlere Bereich, der zur Bestimmung der Analytkonzentration herangezogen werden kann, wird als Nachweiszone (10) bezeichnet. Die Größe der Nachweiszone beträgt in dem dargesellten Beispiel ca. 2 x 3 mm. Eine derart kleine Nachweiszone wirft meßtechnisch insbesondere zwei Probleme auf. Zum einen muß von der Nachweiszone ein ausreichend starkes Signal erhalten werden, das eine verläßliche Bestimmung der Analytkonzentration erlaubt und andererseits muß sichergestellt werden, daß bei Auswertung der Nachweiszone keine Remissionsbeiträge von außerhalb der Nachweiszone beitragen. Beide Anforderungen sind in der Praxis eng miteinander verbunden, da man zur Erhöhung des Meßsignales bestrebt sein wird, die Nachweiszone möglichst vollständig zu vermessen, was jedoch bedeutet, daß man Gefahr läuft, Beiträge von außerhalb der Nachweiszone zu erhalten, wenn keine exakte Positionierung der Nachweiszone zur Beleuchtungseinheit sichergestellt werden kann. Das Problem der Positionierung ist bei Kapillarspalttestelementen besonders groß, da die Lage des Kapillarspaltes herstellungsbedingt relativ stark schwankt. Mit der vorliegenden Erfindung ist es jedoch auf einfache Weise möglich, einerseits einen relativ großen Teil der Nachweiszone auszuwerten und andererseits Fehlbeiträge von Bereichen außerhalb der Nachweiszone zu vermeiden.

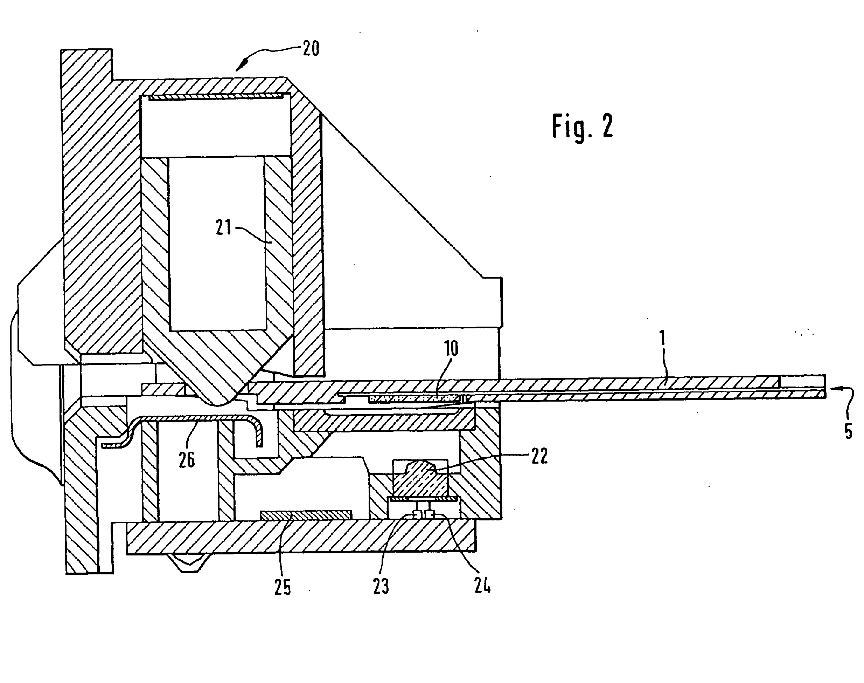

Figur 2 zeigt eine erfindungsgemäße Vorrichtung (20) in einer Querschnittsdarstellung längs einem Testelement (1). Die Vorrichtung (20) besitzt einen Kanal, in den ein Testelement (1) eingeschoben werden kann. Figur 2 zeigt die Positionierung eines Testelementes in Auswerteposition. Zur Halterung des Testelementes in dieser Position besitzt die Vorrichtung einen verschiebbar gelagerten Zapfen (21) mit einem nach unten konisch zulaufenden Ende. Bei geeigneter Positionierung befindet sich die Spitze des Zapfens in einer Ausnehmung des Testelementes, so daß das Testelement in Richtung seiner Längsachse fixiert und positioniert wird. Der Zapfen (21) kann auch dazu dienen, die Anwesenheit eines Testelementes bzw. dessen Positionierung elektrisch zu signalisieren. Hierzu wird der Zapfen elektrisch leitfähig ausgeführt und auf der ihm gegenüberliegenden Seite der Vorrichtung ein Kontakt (26) vorgesehen. Ohne ein Testelement wird der Zapfen mittels einer Feder gegen den Kontakt (26) gedrückt und ein elektrischer Kontakt zwischen diesen beiden Elementen hergestellt. Wird nun ein Testelement eingeschoben, so schiebt es sich zunächst zwischen Zapfen (21) und Kontakt (26), so daß der elektrische Kontakt aufgehoben wird. Beim Weiterschieben greift jedoch der Zapfen (21) durch die Nut des Testelementes hindurch und der elektrische Kontakt schließt sich erneut.

In Figur 2 ist weiterhin eine optische Anordnung zur Auswertung des Testelementes dargestellt. In der Auswerteposition ist die Nachweiszone (10) des Testelementes gegenüber einer Linse (22) positioniert, auf deren gegenüberliegender Seite sich die Lichtquellen (23, 24) befinden. Die Lichtquelle (23) dient zur Beleuchtung der Nachweiszone, um eine Analytkonzentration zu ermitteln. Mit der Lichtquelle (24) wird eine Zone auf der Nachweiszone beleuchtet, die weiter von der Zugabeöffnung (5) für Probeflüssigkeit entfernt ist, als die von der Lichtquelle (23) beleuchtete Zone. Mit der Lichtquelle (24) kann demnach das erfindungsgemäße Verfahren zur Erkennung eines Probenauftrages durchgeführt werden. Aufgrund des erforderlichen Grades an Miniaturisierung sind die Lichtquellen (23, 24) als Leuchtdioden ausgeführt, die direkt auf die Halbleiterplatine aufgebracht sind.

Figur 2 zeigt weiterhin einen Halbleiterdetektor (25), der von der Nachweiszone reflektierte Strahlung detektiert.

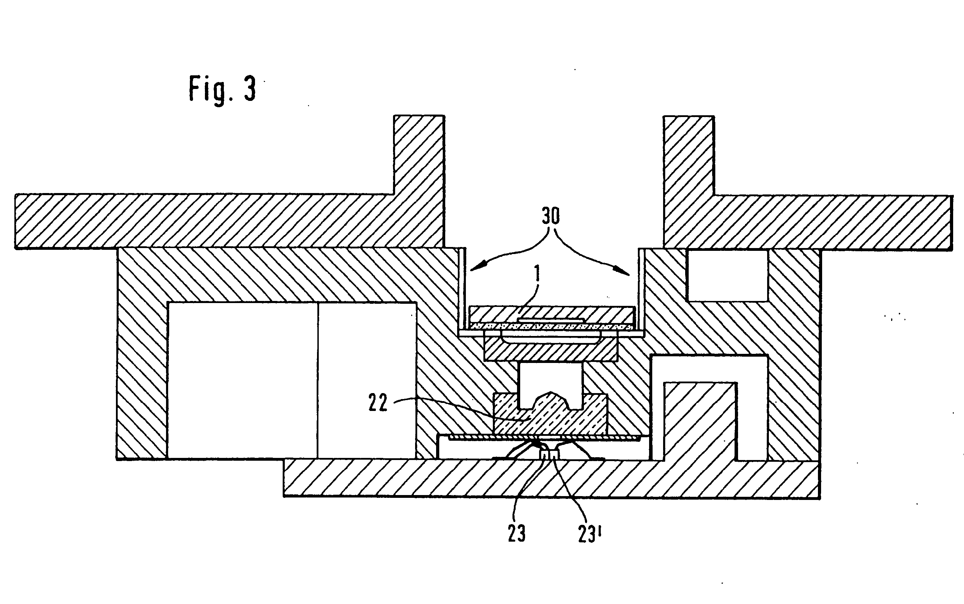

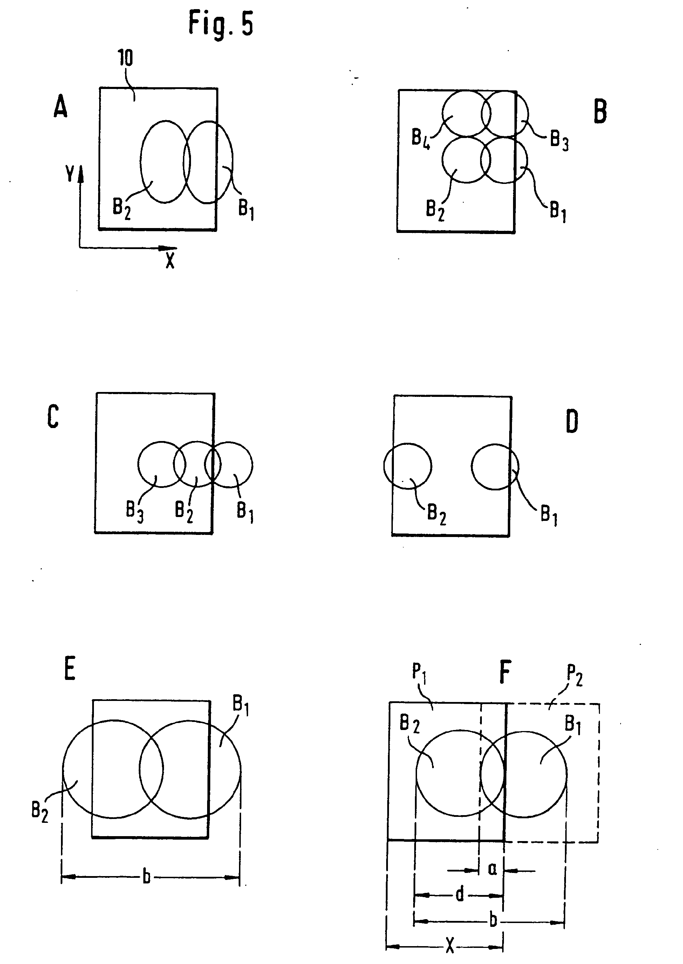

Die laterale Positionierung des Testelementes in der Vorrichtung kann aus Figur 3 entnommen werden. Das Testelement (1) befindet sich in einem Kanal (30), der eine seitliche Verschiebung weitestgehend verhindert. Aufgrund der Herstellungsschwankungen der Testelemente muß der Kanal (30) so bemessen sein, daß er auch noch die größten zu erwartenden Testelemente aufnehmen kann. Hieraus ergibt sich, daß herstellungsbedingt kleinere Testelemente in dem Kanal (30) nicht ideal positionierbar sind, sondern seitlich verschoben sein können. Um trotzdem für alle Testelemente sicher ein Signal der Nachweiszone messen zu können, das von einem beleuchteten Bereich stammt, der vollständig auf der Nachweiszone liegt, kann das erfindungsgemäße Verfahren eingesetzt werden. Hierzu besitzt die Vorrichtung die Lichtquellen (23, 23'), die nebeneinander in Querrichtung zum Testelement angeordnet sind. Für die optische Anordnung ist es von Vorteil, wenn eine Abbildung der Lichtquellen mittels einer Linse (22) oder eines Linsensystemes auf die Nachweiszone des Teselementes erfolgt. Die Beabstandung der Lichtquellen zueinander sowie zur Nachweiszone und die Auslegung der Linse (22) sind so gewählt, daß die im Zusammenhang mit Figur 5 weiter unten erläuterten Randbedingungen eingehalten werden.

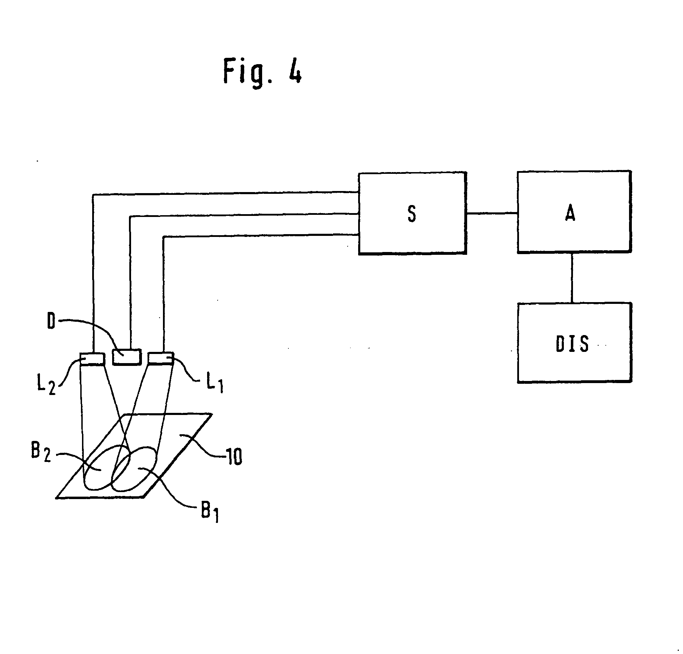

Figur 4 zeigt eine schematische Blockdarstellung einer Vorrichtung zur photometrischen Auswertung von Testelementen. Die erste Lichtquelle L 1 und die zweite Lichtquelle L2 sind nebeneinander angeordnet, so daß sie voneinander verschiedene, jedoch überlappende Bereiche B1 und B2 auf der Nachweiszone (10) beleuchten. Der Detektor (D) empfängt von der Nachweiszone (10) diffus reflektierte Strahlung und leitet das entsprechende Signal an die Steuereinheit (S) weiter.

Die Steuereinheit aktiviert die Lichtquellen L 1 und L2 nacheinander und registriert die jeweils vom Detektor erhaltenen Signale. Diese Signale werden an die Auswerteeinheit (A) weitergeleitet, wo die Signale miteinander verglichen werden und wie weiter oben beschrieben ein geeignetes Signal ausgewählt wird. Im dargestellten Beispiel liegen beide Bereiche B 1 und B2 vollständig auf der Nachweiszone (10), so daß beide zur Berechnung der Analytkonzentration herangezogen werden können. Dementsprechend wird eines der Signale herangezogen, um in bekannter Weise eine Analytkonzentration zu berechnen, welche dann an das Display (DIS) weitergeleitet wird. Im vorliegenden Fall kann auch ein gemitteltes Signal zur Konzentrationsbestimmung dienen.

Figur 5 zeigt einige Beispiele, wie die bestrahlten Bereiche relativ zueinander und relativ zur Nachweiszone angeordnet sein können. Figur 5A zeigt eine besonders bevorzugte Anordnung, bei der die beleuchteten Bereiche B 1 und B2 eine ovale Gestalt aufweisen und teilweise überlappen. Im dargestellten Beispiel würde das von dem beleuchteten Bereich B2 detektierte Signal zur Berechnung der Analytkonzentration herangezogen werden, da dieser Bereich vollständig auf der Nachweiszone (10) liegt, wohingegen ein von dem Bereich B 1 erhaltenes Signal durch Beiträge von außerhalb der Nachweiszone verfälscht ist. In Figur 5A ist weiterhin ein Koordinatensystem angegeben, das zur vereinfachten Beschreibung der Figuren dienen soll. Bei der in Figur 5A gewählten Anordnung der beleuchteten Bereiche wird darauf abgezielt, eine Lagetoleranz der Nachweiszone in Richtung der X-Achse zu kompensieren. Hierzu werden die Bereiche der Beleuchtung so gewählt, daß eine Verbindungsgerade durch ihre Schwerpunkte im wesentlichen parallel zu der Richtung ist, in der eine Lagetoleranz erwartet wird bzw. aufgefangen werden soll. Figur 5B zeigt eine Ausführungsform, mit der eine Kompensation der Lagetoleranz sowohl in Richtung der X- als auch der Y-Achse möglich ist. Es sind hier 4 beleuchtete Bereiche gewählt worden, die in Richtung der X- und der Y-Achse gegeneinander versetzt sind. Da die Bereiche B1, B3 und B4 Remissionen mit Anteilen von außerhalb der Auswertezone hervorrufen, wird zur Auswertung der Bereich B2 herangezogen, da dieser vollständig innerhalb der Nachweiszone liegt.

In Figur 5C ist eine Ausführungsform dargestellt, mit der besonders große Lageschwankungen der Nachweiszone in Richtung der X-Achse abgefangen werden können. In Richtung der X-Achse, in der die Lagetoleranz kritisch ist, sind drei Beleuchtungsbereiche gewählt worden, die zueinander beabstandet sind. Wären nur die Bereiche B 1 und B2 verwendet worden, so wäre keine geeignete Auswertung möglich gewesen, dies ist jedoch mittels des Bereiches B3 möglich.

Figur 5D zeigt eine weniger bevorzugte Ausführungsform, bei der die beleuchteten Bereiche B 1 und B2 nicht überlappen und sogar ein freier Bereich zwischen ihnen besteht. Wie in der Figur dargestellt, können bei dieser Anordnung Lagen auftreten, bei denen weder mit dem einen noch mit dem anderen Beleuchtungsbereich eine exakte Auswertung möglich ist. Dementsprechend ist es im Rahmen der vorliegenden Erfindung bevorzugt, wenn die beleuchteten Bereiche überlappen oder zumindest direkt aneinander angrenzen.

In Figur 5E ist ebenfalls eine weniger bevorzugte Ausführungsform dargestellt, Die beleuchteten Bereiche sind in diesem Fall so groß gewählt, daß sie bei einer mittigen Lage der Nachweiszone beide über die Nachweiszone hinausragen. Eine exakte Auswertung der Nachweiszone ist mit keinem der beiden Bereiche möglich. Im Rahmen der vorliegenden Erfindung ist es daher bevorzugt, wenn die Gesamtbreite (b) der beiden Lichtquellen kleiner ist als die entsprechende Breite der Nachweiszone. Entsprechend muß auch die Größe jedes einzelnen der Beleuchtungsbereiche kleiner sein als die Nachweiszone. Wie bereits erwähnt, wird man bestrebt sein, die beleuchteten Bereiche so groß wie möglich zu machen, um eine maximale Signalausbeute und damit ein gutes Signal-/Rauschverhältnis zu bekommen. Im Einzelfall muß ein Kompromiß zwischen der Größe der Beleuchtungsbereiche sowie deren Überlappung geschlossen werden, der einerseits sicherstellt, daß bei den zu erwartenden Lagetoleranzen stets einer der beleuchteten Bereiche voll auf der Nachweiszone liegt und andererseits das von einem einzelnen Beleuchtungsbereich erhaltene Signal groß genug ist, um die notwendige Genauigkeit der Auswertung zu gewährleisten.

Figur 5F zeigt eine Darstellung, mit der die maximal zulässige Lagetoleranz für eine vorgegebene Anordnung bestimmt werden kann. Es sind zwei beleuchtete Bereiche B1 und B2 dargestellt, die in Richtung der Lagetoleranz jeweils die Breite (d) aufweisen. Die beleuchteten Bereiche B 1 und B2 überlappen sich in Richtung der Lagetoleranz um die Strecke a, so daß sich eine Gesamtbreite b von 2 d - a ergibt. In der Grenzlage P 1 befindet sich B2 noch vollständig auf der Nachweiszone, während sich in der entgegengesetzten Grenzlage P2 (gestrichelt) der Bereich B 1 gerade noch vollständig auf der Nachweiszone befindet. Hieraus ergibt sich, daß die durch die Anordnung maximal tolerierte Lagetoleranz X - a beträgt, wobei X die Breite der Nachweiszone in Richtung der Lagetoleranz ist. Ist somit die Breite X der Nachweiszone bekannt und ebenfalls die maximal auftretende Lageverschiebung von einer Extremlage in die andere ($T_{max}$), so kann die notwendige Überlappung a der beleuchteten Bereiche als X - $T_{max}$ berechnet werden.

Wie bereits ausgeführt, sollte die Breite b; (b = 2 d - a) kleiner sein als X, um den in Figur 5E dargestellten Fall zu vermeiden. Verallgemeinert auf unterschiedliche Durchmesse (d1, d2) ergibt sich: d1 + d2 - a < X. Ist dementsprechend die notwendige Überlappung a in Anbetracht der zu erwartenden Lagetoleranz gewählt worden, so kann hiermit der maximale Durchmesser d (bzw. bei nicht runden Bereichen die Breite) eines einzelnen beleuchteten Bereiches wie folgt berechnet werden: d = (X + a)/2. Bevorzugt sollte die maximale Überlappung der Bereiche so gewählt werden, daß sie kleiner als der halbe Durchmesser der Breite ist (a < (d1 +d2)/ 2). Für eine geeignete Wahl der Überlappung ist im Regelfall nicht nur die lineare Überlappung a wichtig, sondern auch das Verhältnis der Größe der überlappenden Fläche ($F_ü$) zur Fläche eines bestrahlten Bereiches ($F_B$). Experimentell hat sich ergeben, daß $F_ü/F_B$ vorteilhaft kleiner als 0,3 ist und besonders vorteilhaft zwischen 0,2 und 0,1 1 liegt.

Die vorstehenden geometrischen Überlegungen sollen nicht darüber hinwegtäuschen, daß zur Ermittlung der optimalen Verhältnisse in der Regel Experimente notwendig sind. Dies ergibt sich schon daraus, daß die dargestellten beleuchteten Bereiche die wahren Verhältnisse nur zum Teil beschreiben können. Im Regelfall wird man davon ausgehen können, daß es sinnvoll ist, mit Bereichen zu kalkulieren, die etwa 90 % der Gesamtintensität beschreiben. Hieraus ergibt sich jedoch, daß ein gewisser Teil an reflektierter Strahlung bereits von außerhalb der Nachweiszone stammt, wenn der eingezeichnete, beleuchtete Bereich randlagig ist. In der Praxis stellt sich weiterhin das Problem, daß die Justage der Lichtquellen produktionstechnisch schwankt und somit ebenfalls Toleranzen in der Überlappung der beleuchteten Bereiche einkalkuliert werden müssen. In der Praxis wird man die Auslegung einer erfindungsgemäßen Vorrichtung daher bevorzugt so durchführen, daß bei Extremlage mindestens eine der Lichtquellen die Nachweiszone voll bestrahlt und ca. 10 % des Leuchtfleckdurchmessers von der nächstgelegenen Kante der Nachweiszone entfernt ist.

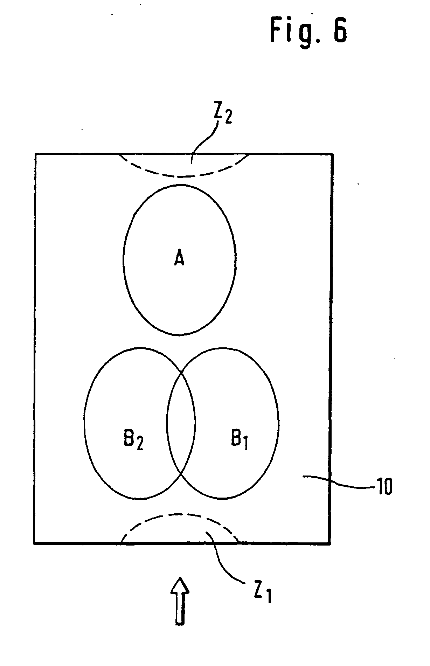

Figur 6 zeigt eine Nachweiszone und die auf ihr bestrahlten Bereiche B1, B2 sowie den Bereich A. Der in Figur 6 dargestellte Pfeil zeigt die Flußrichtung der Probeflüssigkeit in einem Kapillarspalttestelement gemäß Figur 1 an. Demnach kommt die Flüssigkeit zunächst mit der Nachweiszone unterhalb der Bereiche B 1 und B2 und darauffolgend mit der Zone A in Kontakt. Vorteilhaft wird die Lage des Bereiches A so gewählt, daß er nicht oder nur zum Teil mit den Bereichen B1 und B2 überlappt. Während eine Auswertung der Bereiche B 1 und B2 bevorzugt in einem Wellenlängenbereich durchgeführt wird, in dem Probe als solche nicht, jedoch die in der Nachweiszone gebildete Farbe absorbiert, wird zur Vermessung des Bereiches A bevorzugt eine Wellenlänge eingesetzt, bei der die Probe selbst absorbiert. Im Falle von wässrigen Flüssigkeiten kann zur Auswertung des Bereiches A beispielsweise Infrarotstrahlung verwendet werden, die im Bereich der Wasserbanden liegt. Vorzugsweise wird jedoch eine Wellenlänge im Bereich von 800 bis 950 nm eingesetzt, mit der eine Absorption der Bluteigenfarbe detektiert werden kann. Nach Applikation von Probeflüssigkeit in ein Kapillarspalttestelement gemäß Figur 1 wird im Bereich A fortlaufend gemessen und die durch die Nachweiszone transmittierte oder von der Nachweiszone remittierte Strahlung detektiert. Dies kann mit dem gleichen Detektor erfolgen, mit dem auch später die Auswertung der Bereiche B 1 und B2 erfolgt. Vorzugsweise wird jedoch ein spezieller Detektor eingesetzt, der auf den für den Bereich A verwendeten Strahlungsbereich angepaßt ist.

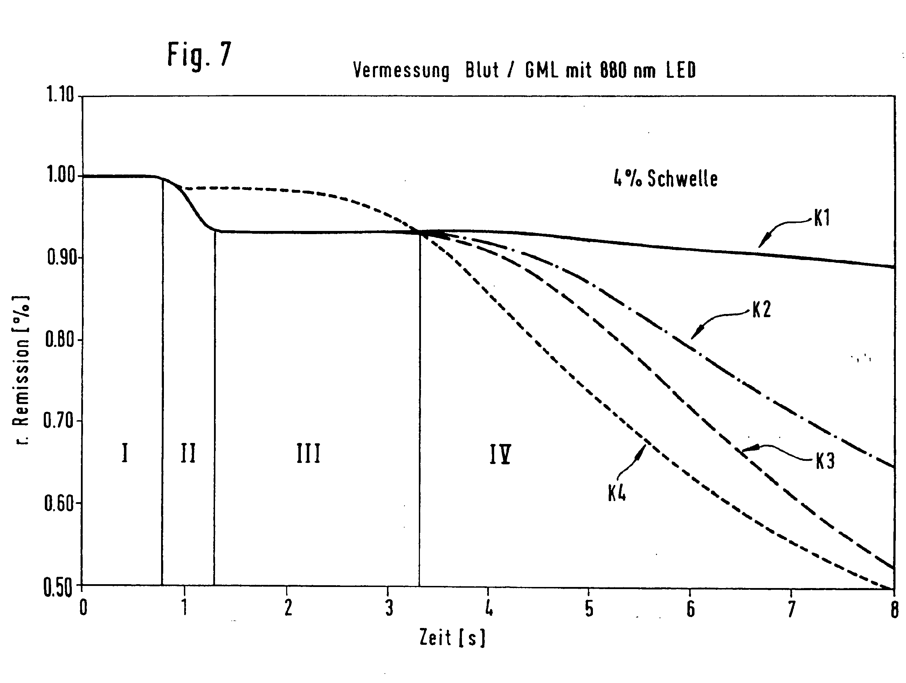

Figur 7 zeigt den mittels Auswertung von Bereich A gewonnenen Signalverlauf über die Zeit. Zum Zeitpunkt 0 wurde Blutflüssigkeit am Kapillarspalt aufgegeben. Während der Zeitspanne I wird im Bereich A für alle Kurven kein nennenswerter Remissionsabfall gemessen. Im Bereich II kann für die Kurven K1, K2 und K3 (Glucosekonzentration: K1:25 mg / d1; K2 : 250 mg / d1; K 3 : 500 mg / d1), die mit Kapillarblut aufgenommen wurden, ein Remissionsabfall festgestellt werden. Der Remissionsabfall gibt zu erkennen, daß Probeflüssigkeit angekommen ist. Das Gerät kann nunmehr dem Benutzer anzeigen, daß er mit einer Zugabe von Probeflüssigkeit aufhören kann, da zur Durchführung des analytischen Tests ausreichend Flüssigkeit vorhanden ist. Dies hat für den Benutzer den Vorteil, daß mit kleineren Blutmengen gearbeitet und die Applikation zeitlich verkürzt werden kann. Im Bereich IV in Figur 7 ist ein fortschreitender Remissionsabfall zu erkennen, der auf die Bildung von Farbstoff in der Nachweiszone zurückgeht. Wie zu erkennen, wäre eine Anzeige, daß ausreichend Probe vorhanden ist, aufgrund einer Farbbildung in der Nachweiszone erst Sekunden später möglich, da die Farbbildung eine gewisse Zeit beansprucht. Der Zeitgewinn von 3 bis 4 Sekunden stellt für den Benutzer bereits einen recht großen Gewinn an Komfort dar.

In Figur 7 ist weiterhin die Kurve K4 dargestellt, die mittels einer farblosen Glucoselösung und einer Detektion bei 880 nm erhalten wurde. Im Gegensatz zu den Kurven K1, K2 und K3 zeigt diese Kurve keinen wesentlichen Remissionsabfall in den Zeitbereichen II und III, sondern erst im Bereich IV wenn eine Farbbildung einsetzt. Aufgrund des Zeitverhaltens des im Bereich A der Nachweiszone detektierten Signals kann somit unterschieden werden, ob es sich um Probeflüssigkeit, insbesondere Blut, oder eine Glucoselösung zur Kontrolle bzw. Kalibration des Gerätes handelt. Erkennt das Gerät, daß eine Kontrollösung verwendet wurde, so kann es eine Messung durchführen und sich selbst kalibrieren. Hierzu kann beispielsweise ein Korrekturfaktor verwendet werden, der sich aus dem Quotienten zwischen gemessener Konzentration und wahrer Konzentration der Kontrollösung errechnet. Spätere Meßwerte können dann vom Gerät automatisch durch Division durch den Korrekturfaktor korrigiert werden. Die wahre Konzentration der Kontrollösung kann beispielsweise im Gerät abgespeichert sein, insbesondere wenn nur eine entsprechend eingestellte Kontrollösung eingesetzt wird oder die Konzentration kann vom Benutzer in das Gerät eingegeben werden.

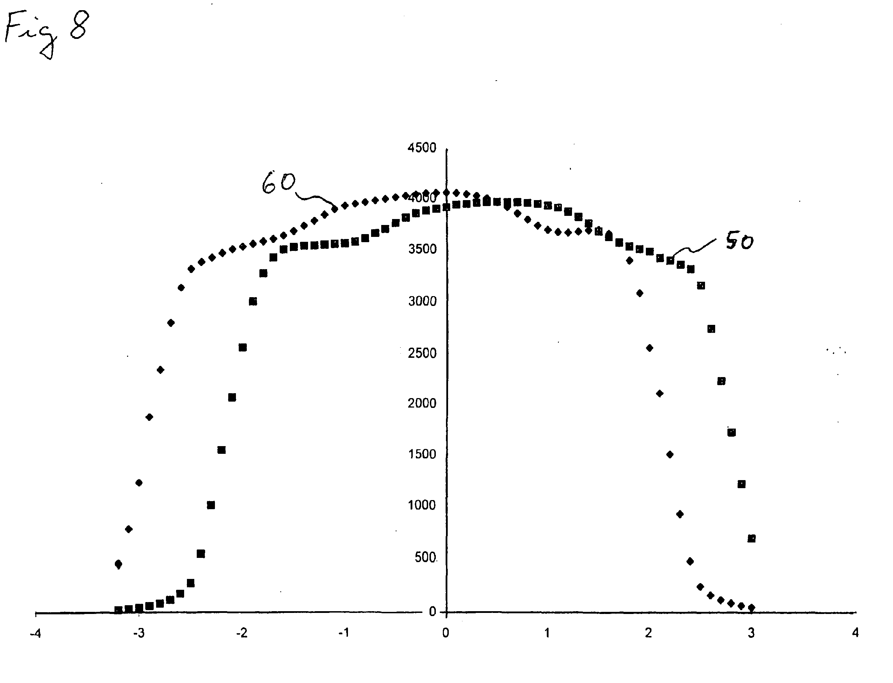

Figur 8 zeigt zwei am Detektor (25; Fig. 2) gemessene Signalverläufe bei verschiedenen Positionen des Testelementes. Auf der Abszisse der Figur ist die relative Lage des Testelementes in Millimetern angegeben.

Die in der Figur 3 dargestellte Lage des Testelementes (1), bei der sich der Kapillarspalt (5) mittig oberhalb der Linse (22) befindet, stellt die Nullage dar. Positive Werte der Abszisse stellen eine laterale Verschiebung des Testelementes quer zum Kapillarspalt dar. Figur 8 zeigt somit, wie sich das gemessene Signal verhält, wenn das Testelement nicht zentrisch positioniert ist oder/und der Kapillarspalt produktionsbedingt nicht mittig im Testelement angeordnet ist.

Auf der Ordinate sind am Detektor gemessene Signale in willkürlichen Einheiten angegeben. Aufgrund der gewählten und in den Figuren 2 und 3 dargestellten Meßgeometrie wird, vom Testelement diffus reflektierte Strahlung detektiert.

Die in Figur 8 dargestellten Signalverläufe zeigen, daß die Signale in der Nähe der Nullage am höchsten sind. Dies erklärt sich daraus, daß die Messungen an einem weißen Reagenzpapier (6) ohne Probenzugabe durchgeführt werden. Im Bereich des Reagenzpapieres, unter dem sich der Kapillarspalt befindet und der nach Probenzugabe als eigentlicher Meßbereich dient, ist die Remission vor Probenzugabe am höchsten.

Außerhalb dieses Bereiches sind die Remissionen etwas niedriger, obwohl noch Remission vom Reagenzpapier erhalten wird. Dies liegt daran, daß das Reagenzpapier in diesen Bereichen mit farbiger Folie hinterklebt ist.

Kurve 50, die aus Meßpunkten gebildet ist, die als Quadrate dargestellt sind, zeigt den Signalverlauf, wenn die Lichtquelle (23) aktiviert ist. Kurve 60, die aus Meßpunkten gebildet wird, die als Rauten dargestellt sind, zeigt hingegen den Signalverlauf bei Verschiebung des Testelementes, wenn Lichtquelle (23') aktiviert ist.

Aus Figur 8 ist zu entnehmen, daß im Bereich von ca. 0 bis +1 mm eine Messung mit Lichtquelle (23) und im Bereich von ca. -1 bis 0 um eine Messung mit Lichtquelle (23') durchgeführt werden kann. Somit ergibt sich, daß mit der Anordnung eine Lagetoleranz von ±1 mm abgefangen werden kann.

**Patentansprüche**

1. Verfahren zur photometrischen Auswertung von Testelementen mit einer Nachweiszone, das stabil gegen Positionierungstoleranzen der Nachweiszone ist, mit den Schritten

    a) Einbringen eines Testelementes in eine Halterung, so daß die Nachweiszone des Testelementes gegenüber einer Beleuchtungseinheit mit mindestens einer ersten und einer zweiten Lichtquelle positioniert wird, wobei in mindestens einer Richtung eine Positionierungstoleranz der Nachweiszone auftritt,
    b) Inkontaktbringen einer Probe mit der Nachweiszone, so daß ein in der Nachweiszone befindliches Nachweissystem mit einem in der Probe enthaltenen Analyten zu einer photometrisch detektierbaren Veränderung der Nachweiszone führt,
    c) Aktivierung der ersten Lichtquelle zur Bestrahlung eines ersten Bereiches der Nachweiszone und Detektion des von der Nachweiszone reflektierten oder durch die Nachweiszone transmittierten Lichtes zur Generierung eines ersten Detektionssignales,
    d) Aktivierung der zweiten Lichtquelle zur Bestrahlung eines zweiten Bereiches der Nachweiszone, der gegenüber dem ersten Bereich in Richtung der Positionierungstoleranz versetzt ist und Detektion des von der Nachweiszone reflektierten oder durch die Nachweiszone transmittierten Lichtes zur Generierung eines zweiten Detektionssignales,
    **gekennzeichnet durch** die folgenden weiteren Schritte :
    e) Vergleich des ersten und des zweiten Detektionssignales und Ermittlung, ob das erste und/oder das zweite Detektionssignal **durch** Beleuchtung eines vollständig auf der Nachweiszone liegenden Bereiches gewonnen wurde und Auswahl des entsprechenden Detektionssignals aus den beiden Signalen
    f) Ermittlung der in der Probe enthaltenen Analytkonzentration **durch** Auswertung des ausgewählten Detektionssignales.

2. Verfahren gemäß Anspruch 1, bei dem das Detektionssignal ausgewählt wird, das eine geringere Intensität aufweist.

3. Verfahren gemäß Anspruch 1, bei dem den Schritten c) und d) entsprechende Schritte durchgeführt werden, bevor die Nachweiszone gemäß Schritt b) mit der Probe in Kontakt gebracht wird, um ein erstes und ein zweites Basis-Detektionssignal an einem unbenutzten Testelement zu ermitteln, und bei dem das erste und das zweite Detektionssignal vor der Ermittlung der Analytkonzentration in Schritt f) durch Division durch das entsprechende Basis-Detektionssignales normiert wird.

4. Verfahren gemäß Anspruch 1, bei dem der von der ersten Lichtquelle bestrahlte erste Bereich und der von der zweiten Lichtquelle bestrahlte zweite Bereich im wesentlichen gleich groß sind.

5. Verfahren gemäß Anspruch 1, bei dem das Testelement ein Kapillarspalt-Testelement ist.

6. Verfahren gemäß Anspruch 1, bei dem die Nachweiszone eine Breite X hat und die erste und zweite Lichtquelle so angeordnet sind, daß eine Verbindungsgerade zwischen den Schwerpunkten der mit den Lichtquellen bestrahlten Bereichen im wesentlichen parallel zu der Breite verläuft.

7. Verfahren gemäß Anspruch 5 und 6, bei dem die Breite im wesentlichen senkrecht zum Kapillarspalt angeordnet ist.

8. Verfahren gemäß Anspruch 1 oder 5, bei dem der von der ersten Lichtquelle bestrahlte Bereich und der von der zweiten Lichtquelle bestrahlte Bereich Ovale sind.

9. Verfahren gemäß Anspruch 1 oder 5, bei dem der von der ersten Lichtquelle bestrahlte Bereich und der von der zweiten Lichtquelle bestrahlte Bereich Rechtecke sind.

10. Verfahren gemäß Anspruch 1, 8 oder 9 bei dem erster und zweiter bestrahlter Bereich überlappen.

11. Verfahren gemäß Anspruch 10, bei dem die maximale Überlappung kleiner als der halbe Durchmesser der bestrahlten Bereiche ist.

12. Verfahren gemäß Anspruch 1, bei dem die Nachweiszone eine Breite X hat und eine Verbindungsgerade zwischen erstem und zweitem bestrahltem Bereich im wesentlichen parallel zu der Breite angeordnet ist, der von der ersten Lichtquelle bestrahlte Bereich eine Breite d1 und der von der zweiten Lichtquelle bestrahlte Bereich eine Breite d2 aufweist sowie die bestrahlten Bereiche in Richtung der Verbindungsgerade um eine maximale Breite a überlappen, wobei gilt:

$$d1 + d2 - a < X.$$

13. Verfahren gemäß Anspruch 12, bei dem weiterhin gilt:

$$a < (d1+d2)/2$$

14. Verfahren gemäß Anspruch 1, bei dem die Beleuchtungseinheit mindestens eine weitere Lichtquelle aufweist, mit der ein dritter Bereich bestrahlt wird und eine Veränderung der von dem dritten Bereich reflektierten oder transmittierten Strahlung detektiert wird, um eine Anwesenheit von Probe zu erkennen.

15. Verfahren gemäß Anspruch 14, bei dem die mindestens eine weitere Lichtquelle Strahlung in einem von den mindestens zwei Lichtquellen verschiedenen, zweiten Wellenlängenbereich emittiert und eine Detektion transmittierter oder reflektierter Strahlung zum Erkennen einer Anwesenheit von Probe in diesem zweiten Wellenlängenbereich erfolgt.

16. Verfahren gemäß Anspruch 15, bei dem der zweite Wellenlängenbereich im Bereich von 800 bis 950 nm liegt.

17. Verfahren gemäß Anspruch 14, bei dem sich der dritte Bereich auf der Nachweiszone befindet.

18. Verfahren gemäß Anspruch 17, bei dem die Probe fließend mit der Nachweiszone in Kontakt gebracht wird und der dritte Bereich flußabwärts zu dem ersten und zweiten Bereich liegt.

19. Vorrichtung zur photometrischen Auswertung von Testelementen, beinhaltend:

- eine Beleuchtungseinheit mit mindestens einer ersten und einer zweiten Lichtquelle,
- eine Halterung zur Aufnahme eines Testelementes mit einer Nachweiszone in der Weise, daß die Nachweiszone gegenüber der Beleuchtungseinheit positioniert wird,
- eine Detektionseinheit mit mindestens einem Detektor, der von der Nachweiszone reflektiertes oder durch die Nachweiszone transmittiertes Licht detektiert,
- eine Steuerungseinheit, die die erste Lichtquelle während einer ersten Aktivierungsphase zur Beleuchtung eines ersten Bereiches der Nachweiszone und die zweite Lichtquelle während einer zweiten Aktivierungsphase zur Beleuchtung eines zweiten Bereiches der Nachweiszone aktiviert und das von der Detektionseinheit während der ersten Aktivierungsphase generierte Signal als erstes Detektionssignal und das während der zweiten Aktivierungsphase generierte Signal als zweites Detektionssignal aufnimmt,
**gekennzeichnet durch** das folgende weitere Merkmal :
- eine Auswerteeinheit, die erstes und zweites Detektionssignal vergleicht und ermittelt, ob das erste und/oder das zweite Detektionssignal **durch** Beleuchtung eines vollständig auf der Nachweiszone liegenden Bereiches gewonnen wurde und ein entsprechendes Detektionssignal aus den beiden Signalen auswählt und auswertet, um die in der Probe enthaltene Analytkonzentration zu ermitteln.

20. Vorrichtung gemäß Anspruch 19, **dadurch gekennzeichnet, daß** die Beleuchtungseinheit mindestens eine weitere, dritte Lichtquelle besitzt, die Strahlung in einem von den mindestens zwei Lichtquellen verschiedenen, zweiten Wellenlängenbereich emittiert, so dass eine Detektion transmittierter oder reflektierter Strahlung in diesem zweiten Wellenlängenbereich erfolgen kann.

21. Vorrichtung gemäß Anspruch 20, **dadurch gekenn-**

**zeichnet, daß** der zweite Wellenlängenbereich im Bereich von 800 bis 950 nm liegt.

**22.** Vorrichtung gemäß Anspruch 20, **dadurch gekennzeichnet, daß** die dritte Lichtquelle einen Bereich der Nachweiszone bestrahlt, der nicht mit erstem und zweiten beleuchteten Bereich überlappt.

**Claims**

**1.** Method for the photometric analysis of test elements with a detection zone which is stable towards positioning tolerances of the detection zone comprising the steps

a) placing a test element in a holder such that the detection zone of the test element is positioned opposite to an illumination unit with at least one first and one second light source, a positioning tolerance of the detection zone occurring in at least one direction,
b) contacting a sample with the detection zone such that a detection system present in the detection zone leads to a photometrically detectable change in the detection zone when an analyte is present in the sample,
c) activating the first light source to irradiate a first region of the detection zone and detecting the light reflected from the detection zone or transmitted through the detection zone in order to generate a first detection signal,
d) activating the second light source to irradiate a second region of the detection zone which is displaced opposite to the first region in the direction of the positioning tolerance and detecting the light reflected from the detection zone or transmitted through the detection zone in order to generate a second detection signal,
**characterized by** the following additional steps:
e) comparing the first and the second detection signal and determining whether the first and/or the second detection signal has been obtained by illuminating an area situated completely on the detection zone and selecting the corresponding detection signal from the two signals,
f) determining the analyte concentration contained in the sample by analysing the selected detection signal.

**2.** Method according to claim 1, wherein the detection signal that has a lower intensity is selected.

**3.** Method according to claim 1, wherein appropriate steps are carried out in steps c) and d) before the detection zone is contacted with sample according to step b) in order to determine a first and a second base-line detection signal on an unused test element and wherein the first and the second detection signal are standardized by division by the corresponding base-line detection signal before determining the analyte concentration in step f).

**4.** Method according to claim 1, wherein the first region irradiated by the first light source and the second region irradiated by the second light source have essentially the same size.

**5.** Method according to claim 1, wherein the test element is a capillary gap test element.

**6.** Method according to claim 1, wherein the detection zone has a width X and the first and second light source are arranged such that a connecting line between the focal points of the regions irradiated by the light sources runs essentially parallel to the width.

**7.** Method according to claim 5 and 6, wherein the width is arranged essentially perpendicular to the capillary gap.

**8.** Method according to claim 1 or 5, wherein the region irradiated by the first light source and the region irradiated by the second light source are ovals.

**9.** Method according to claim 1 or 5, wherein the region irradiated by the first light source and the region irradiated by the second light source are rectangles.

**10.** Method according to claim 1, 8 or 9, wherein the first and second irradiated regions overlap.

**11.** Method according to claim 10, wherein the maximum overlap is less than half the diameter of the irradiated regions.

**12.** Method according to claim 1, wherein the detection zone has a width X and a connecting line between the first and the second irradiated region is arranged essentially parallel to the width, the region irradiated by the first light source has a width d1 and the region irradiated by the second light source has a width d2 and the irradiated regions overlap over a maximum width "a" in the direction of the connecting line whereby the following applies:

$$d1 + d2 - a < X.$$

**13.** Method according to claim 12, in which the following additionally applies:

$$a < (d1 + d2)/2.$$

**14.** Method according to claim 1, wherein the illumination unit has at least one additional light source which irradiates a third region and a change in the radiation reflected or transmitted from the third region is detected in order to detect the presence of sample.

**15.** Method according to claim 14, wherein the at least one additional light source emits radiation in a second wavelength range that is different from that of the at least two light sources and radiation transmitted or reflected in this second wavelength range is detected in order to detect the presence of sample.

**16.** Method according to claim 15, wherein the second wavelength range is in the range of 800 to 950 nm.

**17.** Method according to claim 14, wherein the third region is located on the detection zone.

**18.** Method according to claim 17, wherein the sample is brought into flow contact with the detection zone and the third region is located downstream of the first and second region.

**19.** Device for the photometric analysis of test elements comprising:

- an illumination unit comprising at least one first and one second light source,
- a holder for holding a test element with a detection zone in such a manner that the detection zone is positioned opposite to the illumination unit,
- a detection unit with at least one detector which detects light reflected from the detection zone or transmitted through the detection zone,
- a control unit which activates the first light source during a first activation phase in order to illuminate a first region of the detection zone and activates the second light source during a second activation phase in order to illuminate a second region of the detection zone and the signal generated by the detection unit during the first activation phase is recorded as the first detection signal and the signal generated during the second activation phase is recorded as the second detection signal,
**characterized by** the following additional feature:
- an analytical unit which compares the first and second detection signal and determines whether the first and/or the second detection signal has been obtained by illuminating a region situated completely on the detection zone and a corresponding detection signal is selected from the two signals and analysed in order to determine the analyte concentration in the sample.

**20.** Device according to claim 19, **characterized in that** the illumination unit has at least one additional third light source which emits radiation in a second wavelength range that is different from that of the at least two light sources such that radiation transmitted or reflected in this second wavelength range can be detected.

**21.** Device according to claim 20, **characterized in that** the second wavelength range is in the range from 800 to 950 nm.

**22.** Device according to claim 20, **characterized in that** the third light source irradiates a region of the detection zone which does not overlap with the first and second illumination region.

**Revendications**

**1.** Procédé pour l'évaluation photométrique d'éléments de test avec une zone de détection, qui est stable par rapport aux tolérances de positionnement de la zone de détection, comprenant les étapes suivantes

a) l'introduction d'un élément de test dans un support, de sorte que la zone de détection de l'élément de test est positionnée en face d'une unité d'éclairage comprenant au moins une première et une seconde source lumineuse, une tolérance de positionnement de la zone de détection apparaissant dans au moins une direction,
b) mise en contact d'un échantillon avec la zone de détection, de sorte qu'un système de détection se trouvant dans la zone de détection avec un analyte contenu dans l'échantillon aboutit à une modification détectable au plan photométrique de la zone de détection,
c) activation de la première source lumineuse pour l'irradiation d'un premier secteur de la zone de détection et détection de la lumière réfléchie par la zone de détection ou transmise par la zone de détection pour générer un premier signal de détection,
d) activation de la seconde source lumineuse pour l'irradiation d'un second secteur de la zone de détection, qui est décalé par rapport au premier secteur en direction de la tolérance de positionnement et détection de la lumière réfléchie par la zone de détection ou transmise par la zone de détection pour la génération d'un second signal de détection,
**caractérisé par** les autres étapes suivantes :
e) comparaison du premier et du second signal de détection et détermination pour savoir si le premier et/ou le second signal de détection a été obtenu par l'éclairage d'une zone située complètement sur la zone de détection et choix du signal de détection correspondant à partir des deux signaux

f) détermination de la concentration d'analyte contenue dans l'échantillon par l'évaluation du signal de détection sélectionné.

2. Procédé selon la revendication 1, dans lequel le signal de détection est sélectionné, lequel présente une intensité plus faible.

3. Procédé selon la revendication 1, dans lequel des étapes correspondant aux étapes c) et d) sont effectuées avant que la zone de détection soit mise en contact selon l'étape b) avec l'échantillon afin de déterminer un premier et un second signal de détection de base sur un élément de test non utilisé, et dans lequel le premier et le second signal de détection sont normalisés avant le calcul de la concentration d'analyte à l'étape f) par division par le signal de détection de base correspondant.

4. Procédé selon la revendication 1, dans lequel le premier secteur irradié par la première source lumineuse et le second secteur irradié par la seconde source lumineuse présentent une taille sensiblement identique.

5. Procédé selon la revendication 1, dans lequel l'élément de test est un élément de test à fente capillaire.

6. Procédé selon la revendication 1, dans lequel la zone de détection a une largeur X et la première et la seconde source lumineuse sont disposées de telle sorte qu'une droite de liaison entre les centres de gravité des secteurs irradiés avec les sources lumineuses est sensiblement parallèle à la largeur.

7. Procédé selon les revendications 5 et 6, dans lequel la largeur est disposée sensiblement perpendiculairement à la fente capillaire.

8. Procédé selon la revendication 1 ou 5, dans lequel le secteur irradié par la première source lumineuse et le secteur irradié par la seconde source lumineuse sont des ovales.

9. Procédé selon la revendication 1 ou 5, dans lequel le secteur irradié par la première source lumineuse et le secteur irradié par la seconde source lumineuse sont des rectangles.

10. Procédé selon les revendications 1, 8 ou 9, dans lequel le premier et le second secteur irradié se chevauchent.

11. Procédé selon la revendication 10, dans lequel le chevauchement maximal est inférieur au demi-diamètre des secteurs irradiés.

12. Procédé selon la revendication 1, dans lequel la zone de détection a une largeur X et une droite de liaison entre le premier et le second secteur irradié est disposée sensiblement parallèlement à la largeur, le secteur irradié par la première source lumineuse présente une largeur d1 et le secteur irradié par la seconde source lumineuse une largeur d2 et les secteurs irradiés se chevauchent d'une largeur a maximale en direction de la zone de la droite de liaison, sachant que :

$$d1 + d2 - a < x$$

13. Procédé selon la revendication 12, dans lequel on a également :

$$a < (d1 + d2)/2$$

14. Procédé selon la revendication 1, dans lequel l'unité d'éclairage présente au moins une autre source lumineuse, avec laquelle un troisième secteur est irradié et une modification du rayonnement réfléchi ou transmis par le troisième secteur est détectée afin d'identifier une présence d'échantillon.

15. Procédé selon la revendication 14, dans lequel l'au moins une autre source lumineuse émet du rayonnement dans une seconde plage de longueurs d'onde différente des au moins deux sources lumineuses et une détection de rayonnement transmis ou réfléchi intervient pour identifier une présence d'échantillon dans cette seconde plage de longueurs d'onde.

16. Procédé selon la revendication 15, dans lequel la seconde plage de longueurs d'onde se situe dans la plage de 800 à 950 nm.

17. Procédé selon la revendication 14, dans lequel le troisième secteur se trouve sur la zone de détection.

18. Procédé selon la revendication 17, dans lequel l'échantillon est mis en contact de façon courante avec la zone de détection et le troisième secteur est disposé en aval du premier et du second secteur.

19. Dispositif pour l'évaluation photométrique d'éléments de test, comprenant :

- une unité d'éclairage avec au moins une première et une seconde source lumineuse,
- un support pour la réception d'un élément de test avec une zone de détection d'une manière telle que la zone de détection est positionnée en face de l'unité d'éclairage.

- une unité de détection comprenant au moins un détecteur qui détecte de la lumière réfléchie par la zone de détection ou transmise par la zone de détection.

- une unité de commande qui active la première source lumineuse pendant une première phase d'activation pour l'éclairage d'un premier secteur de la zone de détection et la seconde source lumineuse pendant une seconde phase d'activation pour l'éclairage d'un second secteur de la zone de détection et reçoit le signal généré par l'unité de détection pendant la première phase d'activation comme premier signal de détection et le signal généré pendant la seconde phase d'activation comme second signal de détection

**caractérisé par** l'autre caractéristique suivante :

- une unité d'évaluation qui compare le premier et le second signal de détection et détermine si le premier et/ou le second signal de détection a/ont été obtenu(s) par l'éclairage d'un secteur situé complètement sur la zone de détection et sélectionne un signal de détection approprié à partir des deux signaux et l'analyse afin de déterminer la concentration d'analyte contenue dans l'échantillon.

**20.** Dispositif selon la revendication 19, **caractérisé en ce que** l'unité d'éclairage présente au moins une autre troisième source lumineuse, qui émet du rayonnement dans une seconde plage de longueurs d'onde différente des au moins deux sources lumineuses, de sorte qu'une détection de rayonnement transmis ou réfléchi peut s'effectuer dans cette seconde plage de longueurs d'onde.

**21.** Dispositif selon la revendication 20, **caractérisé en ce que** la seconde plage de longueurs d'onde se situe dans la plage de 800 à 950 nm.

**22.** Dispositif selon la revendication 20, **caractérisé en ce que** la troisième source lumineuse irradie un secteur de la zone de radiation qui ne coïncide pas avec le premier et le second secteur irradié.

# Fig. 1

A

B

EP 1 117 989 B1

Fig. 2

15

Fig. 3

EP 1 117 989 B1

# Fig. 4

## Fig. 5

# Fig. 6

Fig. 7

Fig 8

EP 1 117 989 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0618443 B
- US 5424035 A
- EP 0319922 A
- US 5463467 A